# EUROPEAN PATENT APPLICATION

(11) **EP 4 481 929 A1**
(43) Date of publication of application: **25.12.2024**
(21) Application number: 23882897.4
(22) Date of filing: 18.09.2023
(51) Int. Cl.: H01M 50/454, H01M 50/403, H01M 50/417, H01M 50/491, H01M 10/052

(54) **METHOD OF PREPARING SEPARATOR FOR LITHIUM SECONDARY BATTERY, SEPARATOR FOR LITHIUM SECONDARY BATTERY PREPARED THEREFROM, AND LITHIUM SECONDARY BATTERY HAVING SAME**

(30) Priority: 24.10.2022 KR 20220137543
(71) Applicant: LG Energy Solution, Ltd., Seoul 07335 (KR)
(72) Inventor: KIM, Kyung-Tae, Daejeon 34122 (KR); BAE, Won-Sik, Daejeon 34122 (KR); LEE, So-Yeong, Daejeon 34122 (KR); JEONG, So-Mi, Daejeon 34122 (KR)
(74) Representative: Hoffmann Eitle
(86) International application number: PCT/KR2023/014084
(87) International publication number: WO 2024/090790

(57) **Abstract**

Provided is a method for manufacturing a separator for a lithium secondary battery, comprising: (S1) electrospinning a solution in which β-chitin is dissolved in a solvent on at least one surface of a porous polyolefin substrate having a plurality of pores; and (S2) drying a result of the (S1) to form a porous coating layer of β-chitin nanofibers.

## Description

### TECHNICAL FIELD

The present disclosure relates to a method for manufacturing a separator for a lithium secondary battery, a separator for a lithium secondary battery manufactured thereby and a lithium secondary battery comprising the same.

The present application claims priority to Korean Patent Application No. 10-2022-0137543 filed on October 24, 2022 in the Republic of Korea, the disclosure of which is incorporated herein by reference.

### BACKGROUND ART

Recently, there is growing attention to energy storage technology. With an extended range of applications as sources of energy for mobile phones, camcorders and laptop computers and even electric vehicles, more efforts are being made in the research and development of electrochemical devices. In this aspect, in the field of electrochemical devices attracting most attention, the development of rechargeable secondary batteries, for example, lithium secondary batteries is the center of attention.

In the battery, the basic requirements of a separator include separation and electrical insulation of a positive electrode from a negative electrode and high ionic conductivity by high ion permeability, for example, lithium ions based on high porosity. The commonly used substrate of the separator chiefly includes porous polyolefin substrates made of polyolefin-based materials such as polyethylene (PE) and polypropylene (PP) since it is easy to form pores and is good at chemical resistance, mechanical properties and thermal characteristics.

However, the separator using the porous polyolefin substrate suffers an internal short circuit due to thermal shrinkage of the separator at high temperature, and in the event of thermal runaway, the polymer separator substrate melts, and is at increased fire risk. Accordingly, to enhance the heat resistance of the polyolefin substrate, a separator having an inorganic/organic composite porous coating layer formed from a mixture of inorganic particles and a binder polymer on the surface of a porous polyolefin substrate has been developed.

The separator having the inorganic/organic composite porous coating layer has high heat resistant characteristics, but to form the inorganic/organic composite porous coating layer, when coating and drying a slurry comprising the inorganic particles and the binder polymer, the binder polymer penetrates into the pores of the porous polyolefin substrate. As a consequence, there are problems with nonuniform movement of lithium ions, increased resistance and lithium dendrite growth.

### SUMMARY

### Technical Problem

The present disclosure is designed to solve the above-described problems, and an object according to an aspect of the present disclosure is to provide a method for manufacturing a separator for a lithium secondary battery having a porous coating layer for enhancing heat resistant characteristics of a porous polyolefin substrate and preventing pore penetration of the porous polyolefin substrate.

In addition to the above-described feature, an object according to another aspect of the present disclosure is to provide a method for manufacturing a separator for a lithium secondary battery having a porous coating layer for inducing uniform movement of lithium ions to reduce resistance.

An object according to still another aspect of the present disclosure is to provide a separator for a lithium secondary battery having the above-described feature.

An object according to yet another aspect of the present disclosure is to provide a lithium secondary battery comprising the separator having the above-described feature.

### Technical Solution

An aspect of the present disclosure provides a method for manufacturing a separator for a lithium secondary battery according to the following embodiments.

A first embodiment relates to the method for manufacturing the separator for the lithium secondary battery, comprising (S1) electrospinning a solution in which β-chitin is dissolved in a solvent on at least one surface of a porous polyolefin substrate having a plurality of pores; and (S2) drying a result of the (S1) to form a porous coating layer of β-chitin nanofibers.

In the first embodiment, a second embodiment relates to the method for manufacturing the separator for the lithium secondary battery, wherein a thickness of the porous coating layer is 0.5 to 10 µm, and more specifically, 1 to 3 µm, based on the thickness on one surface of the porous polyolefin substrate.

In any one of the first and second embodiments, a third embodiment relates to the method for manufacturing the separator for the lithium secondary battery, wherein a loading amount of the porous coating layer is 0.5 to 15 g/m² based on the loading amount on one surface of the porous polyolefin substrate.

In any one of the first to third embodiments, a fourth embodiment relates to the method for manufacturing the separator for the lithium secondary battery, wherein an average diameter of the β-chitin nanofibers is 200 to 2,000 nm.

In any one of the first to fourth embodiments, a fifth embodiment relates to the method for manufacturing the separator for the lithium secondary battery, wherein the porous polyolefin substrate is made of polyethylene.

In any one of the first to fifth embodiments, a sixth embodiment relates to the method for manufacturing the separator for the lithium secondary battery, wherein the solvent is 1,1,1,3,3,3-hexafluoro-2-propanol (HFIP).

Another aspect of the present disclosure provides a separator for a lithium secondary battery according to the following embodiments.

A seventh embodiment relates to the separator for the lithium secondary battery, comprising a porous polyolefin substrate having a plurality of pores; and a porous coating layer of electrospun β-chitin nanofibers on at least one surface of the porous polyolefin substrate.

In the seventh embodiment, an eighth embodiment relates to the separator for the lithium secondary battery, wherein a thickness of the porous coating layer is 0.5 to 10 µm, and more specifically, 1 to 3 µm, based on the thickness on one surface of the porous polyolefin substrate.

In the seventh or eighth embodiment, a ninth embodiment relates to the separator for the lithium secondary battery, wherein a loading amount of the porous coating layer is 0.5 to 15 g/m² based on the loading amount on one surface of the porous polyolefin substrate.

In any one of the seventh to ninth embodiments, a tenth embodiment relates to the separator for the lithium secondary battery, wherein an average diameter of the β-chitin nanofibers is 200 to 2,000 nm.

In any one of the seventh to tenth embodiments, an eleventh embodiment relates to the separator for the lithium secondary battery, wherein the porous polyolefin substrate is made of polyethylene.

Still another aspect of the present disclosure provides a lithium secondary battery, comprising a positive electrode, a negative electrode and the separator according to any one of the seventh to eleventh embodiments interposed between the positive electrode and the negative electrode.

### Advantageous Effects

According to the present disclosure, the porous coating layer of β-chitin nanofibers is formed on at least one surface of the porous polyolefin substrate by electrospinning.

The β-chitin maintains the shape of the porous coating layer of nanofibers at 180°C due to high heat resistance, and suppresses thermal shrinkage of the porous polyolefin substrate, thereby improving heat resistant characteristics of the substrate. Additionally, since the porous coating layer of β-chitin nanofibers is formed by electrospinning, it may be possible to notably suppress the penetration of β-chitin into the pores of the porous polyolefin substrate. Accordingly, it may be possible to solve the problem with nonuniform movement of lithium ions or increased resistance, and minimize lithium dendrite growth.

Additionally, the β-chitin is a polymer having high dielectric properties due to functional groups in molecules, and exhibits high affinity for lithium ions. Accordingly, the porous coating layer of β-chitin nanofibers induces uniform movement of lithium ions, thereby reducing resistance and suppressing lithium dendrite growth.

### BRIEF DESCRIPTION OF THE DRAWING

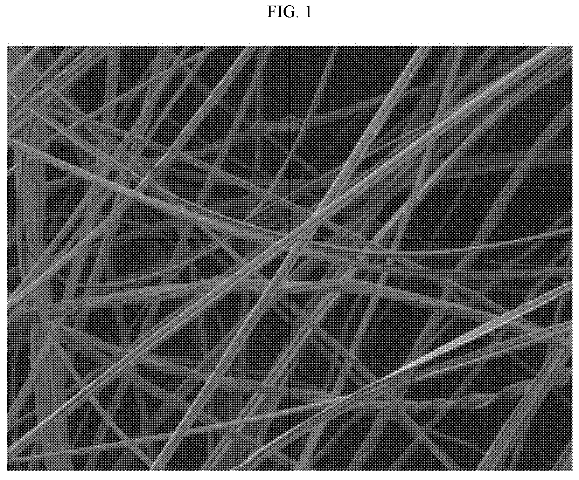

FIG. 1 is a surface scanning electron microscopy (SEM) image of a porous coating layer of a separator according to example 1 of the present disclosure.

### DETAILED DESCRIPTION

Hereinafter, it should be understood that the terms or words used in the present disclosure and the appended claims should not be construed as limited to general and dictionary meanings, but rather interpreted based on the meaning and concept corresponding to the technical aspect of the present disclosure on the basis of the principle that the inventor is allowed to define terms appropriately for the best explanation.

An embodiment of the present disclosure relates to a method for manufacturing a separator for a lithium secondary battery, comprising:
(S1) electrospinning a solution in which β-chitin is dissolved in a solvent on at least one surface of a porous polyolefin substrate having a plurality of pores; and
(S2) drying a result of the (S1) to form a porous coating layer of β-chitin nanofibers.

First, the electrospinning of the solution in which β-chitin is dissolved in the solvent is performed on at least one surface of the porous polyolefin substrate having the plurality of pores (S 1).

The porous polyolefin substrate may include any polyolefin substrate commonly used as separators. For example, the porous polyolefin substrate may be formed from at least one of polyolefin-based polymers including polyethylene such as high density polyethylene, linear low density polyethylene, low density polyethylene and ultra high molecular weight polyethylene, polypropylene, polybutylene, polypentene and so on. The porous polyolefin substrate exerts a shutdown function, for example, at the temperature of 80 to 150°C. From this perspective, the porous polyolefin substrate is preferably made of polyethylene.

The solvent used to dissolve β-chitin may include any solvent capable of dissolve the β-chitin to perform the electrospinning, and may include, for example, 1,1,1,3,3,3-hexafluoro-2-propanol (HFIP).

According to an embodiment, the coating by the electrospinning is performed by feeding the β-chitin solution as a spinning solution into an electrospinning nozzle adjusted to room temperature to 80°C, and performing the electrospinning with an electric field formed between the electrospinning nozzle and the porous polyolefin substrate, and for example, the electric field may be formed by applying a voltage of 1 to 30 kV. Subsequently, the β-chitin solution is ejected from the electrospinning nozzle with applied high voltage to form nanofiber coating on the porous polyolefin substrate.

In this instance, the porous polyolefin substrate as an electrospinning target, facing the spinning nozzle, may be located in a direction parallel to the bottom surface, and may be located in a direction perpendicular to the bottom surface.

Subsequently, the result of the (S1) is dried to remove the solvent to form the porous coating layer of β-chitin nanofibers (S2).

A great part of the solvent may get dry immediately after the electrospinning, but the solvent may be completely removed using a dryer. When forming the porous coating layer of β-chitin nanofibers through the electrospinning, the β-chitin hardly penetrates into the pores of the porous polyolefin substrate. That is, it may be possible to notably suppress the penetration of β-chitin into the pores of the porous polyolefin substrate. Accordingly, it may be possible to solve the problem with nonuniform movement of lithium ions or increased resistance, and minimize lithium dendrite growth.

Meanwhile, the β-chitin maintains the shape of the porous coating layer of nanofibers at 180°C due to high heat resistance. Accordingly, the porous coating layer of β-chitin nanofibers suppresses thermal shrinkage of the porous polyolefin substrate, thereby improving heat resistant characteristics of the substrate. Additionally, the β-chitin is a polymer having high dielectric properties due to functional groups in molecules, and exhibits high affinity for lithium ions. Accordingly, since the porous coating layer of β-chitin nanofibers induces uniform movement of lithium ions, thereby reducing resistance and suppressing lithium dendrite growth. In contrast, α-chitin and γ-chitin are very not good at reducing the resistance of the porous coating layer due to lower dielectric properties than β-chitin.

The average diameter of β-chitin nanofibers may be adjusted according to the concentration of β-chitin in the solvent and the diameter of the spinning nozzle, and may be, for example, 200 to 2,000 nm. The porous coating layer of β-chitin nanofibers has a 3-dimensional (3D) shape by entanglement, and the pore size of the porous coating layer may be adjusted according to the average diameter of the β-chitin nanofibers and the loading amount of the porous coating layer. The loading amount of the porous coating layer may be 0.5 to 15 g/m² based on the loading amount on one surface of the porous polyolefin substrate but is not limited thereto. The porous coating layer is preferably formed on two surfaces of the porous polyolefin substrate, and in this instance, the loading amount of the porous coating layer may be 1 to 30 g/m² based on the loading amount on the two surfaces of the porous polyolefin substrate.

The thickness of the porous coating layer may be 0.5 to 10 µm, and more specifically 1 to 3 µm based on the thickness on one surface of the porous polyolefin substrate but is not limited thereto, and the porous coating layer of β-chitin nanofibers formed through the electrospinning is easy to form a thin film.

Although the present disclosure describes the method for manufacturing the separator for the lithium secondary battery comprising forming the porous coating layer of electrospun β-chitin nanofibers on one surface of the porous polyolefin substrate, it is obvious that the method may further comprise forming the porous coating layer of electrospun β-chitin nanofibers on the other surface of the porous polyolefin substrate by the above-described method, if necessary.

The separator for the lithium secondary battery manufactured by the above-described method comprises the porous polyolefin substrate having the plurality of pores; and the porous coating layer of electrospun β-chitin nanofibers on at least one surface of the porous polyolefin substrate.

As described above, the thickness of the porous coating layer of the separator for the lithium secondary battery may be 0.5 to 10 µm, and more specifically 1 to 3 µm based on the thickness on one surface of the porous polyolefin substrate, the average diameter of the β-chitin nanofibers may be 200 to 2,000 nm, and the loading amount of the porous coating layer may be 0.5 to 15 g/m² based on the loading amount on one surface of the porous polyolefin substrate. Additionally, the porous polyolefin substrate may be made of polyethylene.

Obviously, if necessary, the separator for the lithium secondary battery may further comprise a known polymer adhesive layer on the surface of the porous coating layer to improve the adhesion strength with electrodes.

According to another embodiment of the present disclosure, there is provided a lithium secondary battery comprising the separator for the lithium secondary battery.

A positive electrode and a negative electrode are placed with the separator for the lithium secondary battery by the above-described method interposed between the positive electrode and the negative electrode, and they are assembled into the lithium secondary battery.

Hereinafter, the lithium secondary battery will be described in more detail.

The positive electrode comprises a positive electrode current collector and a positive electrode active material layer on the positive electrode current collector.

In the positive electrode, the positive electrode current collector is not limited to a particular type and may include those having conductive properties without causing any chemical change to the battery, for example, stainless steel, aluminum, nickel, titanium, sintered carbon, aluminum or stainless steel treated with carbon, nickel, titanium or silver on the surface. Additionally, the positive electrode current collector may be typically 3 to 500 µm in thickness, and have microtexture on the surface to improve the adhesion strength of the positive electrode active material. For example, the positive electrode current collector may come in various forms, for example, films, sheets, foils, nets, porous bodies, foams and non-woven fabrics.

The positive electrode active material layer may comprise a positive electrode active material well known in the corresponding technical field, a conductive material and a binder.

The positive electrode active material may include layered compounds or compounds with one or more transition metal substitution such as lithium cobalt oxide (LiCoO₂), lithium nickel oxide (LiNiO₂); lithium manganese oxide of formula Li₁₊ₓMn₂₋ₓO₄ (x = 0 to 0.33), LiMnO₃, LiMn₂O₃, LiMnO₂; lithium copper oxide (Li₂CuO₂); vanadium oxide such as LiV₃O₈, V₂O₅, Cu₂V₂O₇; Ni site lithium nickel oxide represented by formula LiNi₁₋ₓMₓO₂ (M = Co, Mn, Al, Cu, Fe, Mg, B or Ga, x = 0.01 to 0.3); lithium manganese composite oxide represented by formula LiMn₂₋ₓMₓO₂ (M = Co, Ni, Fe, Cr, Zn or Ta, x = 0.01 to 0.1) or Li₂Mn₃MO₈ (M = Fe, Co, Ni, Cu or Zn); LiMn₂O₄ with partial substitution of alkali earth metal ion for Li in the formula; disulfide compounds and Fe₂(MoO₄)₃, but is not limited thereto.

The conductive material is used to impart conductive properties to the electrode, and may include, without limitation, any type of conductive material capable of conducting the flow of electrons without causing any chemical change in the battery. Specific examples of the conductive material may include at least one of graphite, for example, natural graphite or artificial graphite; carbon-based materials, for example, carbon black, acetylene black, ketjen black, channel black, furnace black, lamp black, thermal black and carbon fibers; metal powder or metal fibers, for example, copper, nickel, aluminum and silver; conductive whiskers, for example, zinc oxide and potassium titanate; conductive metal oxide, for example, titanium oxide; or conductive polymers, for example, polyphenylene derivatives. The conductive material may be typically included in an amount of 1 to 30 weight% based on the total weight of the positive electrode active material layer.

The binder plays a role in improving the bonds between the positive electrode active material particles and the adhesion strength between the positive electrode active material and the positive electrode current collector. Specific examples of the binder may include, but is not limited to, at least one of polyvinylidene fluoride (PVDF), polyvinylidene fluoride-hexafluoropropylene copolymer (PVDF-co-HFP), polyvinylalcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylenepropylene-diene polymer (EPDM), sulfonated-EPDM, styrene butadiene rubber (SBR), fluoro rubber, or a variety of copolymers thereof. The binder may be included in an amount of 1 to 30 weight% based on the total weight of the positive electrode active material layer.

The positive electrode may be manufactured by the commonly used positive electrode manufacturing method. Specifically, a positive electrode active material layer forming composition comprising the positive electrode active material, and optionally, the binder and the conductive material may be coated onto the positive electrode current collector, and dried and rolled to manufacture the positive electrode. In this instance, the type and amount of the positive electrode active material, the binder and the conductive material are the same as described above.

The solvent may include solvents commonly used in the corresponding technical field, for example, at least one of dimethyl sulfoxide (DMSO), isopropyl alcohol, N-methylpyrrolidone (NMP), acetone or water. The solvent is present in a sufficient amount to have optimal viscosity to dissolve or disperse the positive electrode active material, the conductive material and the binder in view of the slurry coating thickness and the yield, and subsequently, exhibit good thickness uniformity when coating for the manufacture of the positive electrode.

Another method for manufacturing the positive electrode may include casting the positive electrode active material layer forming composition on a support, peeling off a film from the support and laminating the film on the positive electrode current collector.

The negative electrode comprises a negative electrode current collector and a negative electrode active material layer on the negative electrode current collector.

The negative electrode current collector is not limited to a particular type and may include those having high conductivity without causing any chemical change to the battery, for example, copper, stainless steel, aluminum, nickel, titanium, sintered carbon, copper or stainless steel treated with carbon, nickel, titanium or silver on the surface and an aluminum-cadmium alloy. Additionally, the negative electrode current collector may be typically 3 to 500 µm in thickness, and in the same way as the positive electrode current collector, the negative electrode current collector may have microtexture on the surface to improve the bonding strength of the negative electrode active material. For example, the negative electrode current collector may come in various forms, for example, films, sheets, foils, nets, porous bodies, foams and non-woven fabrics.

The negative electrode active material layer comprises a negative electrode active material, and optionally, a binder and a conductive material. For example, the negative electrode active material layer may be formed by coating and drying a negative electrode active material layer forming composition comprising the negative electrode active material, and optionally, the binder and the conductive material on the negative electrode current collector, or casting the negative electrode active material layer forming composition on a support, peeling off a film from the support and laminating the film on the negative electrode current collector.

The negative electrode active material may include compounds capable of reversible intercalation and deintercalation of lithium. Specific examples of the negative electrode active material may include at least one of carbonaceous materials including artificial graphite, natural graphite, graphitized carbon fibers and amorphous carbon; metallic compounds capable of alloying with lithium such as Si, Al, Sn, Pb, Zn, Bi, In, Mg, Ga, Cd, Si alloy, Sn alloy or Al alloy; metal oxide capable of doping and dedoping lithium such as SiOβ (0<β< 2), SnO₂, vanadium oxide, lithium vanadium oxide; or composites comprising the metallic compounds and the carbonaceous materials such as Si-C composite or Sn-C composite. Additionally, a metal lithium thin film may be used for the negative electrode active material. Additionally, the carbon material may include low crystalline carbon and high crystalline carbon. The low crystalline carbon typically includes soft carbon and hard carbon, and the high crystalline carbon typically includes high temperature sintered carbon such as amorphous, platy, flaky, spherical or fibrous natural graphite or artificial graphite, Kish graphite, pyrolytic carbon, mesophase pitch based carbon fiber, meso-carbon microbeads, Mesophase pitches and petroleum or coal tar pitch derived cokes.

Additionally, the binder and the conductive material may be the same as described in the positive electrode.

Additionally, an electrolyte used in the present disclosure may include, for example, an organic liquid electrolyte, an inorganic liquid electrolyte, a solid polymer electrolyte, a gel polymer electrolyte, a solid inorganic electrolyte and a molten inorganic electrolyte that may be used to manufacture the lithium secondary battery, but is not limited thereto.

Specifically, the electrolyte may comprise an organic solvent and a lithium salt.

The organic solvent may include, without limitation, any type of organic solvent that acts as a medium for the movement of ions involved in the electrochemical reaction of the battery. Specifically, the organic solvent may include an ester-based solvent, for example, methyl acetate, ethyl acetate, γ-butyrolactone, ε-caprolactone; an ether-based solvent, for example, dibutyl ether or tetrahydrofuran; a ketone-based solvent, for example, cyclohexanone; an aromatic hydrocarbon-based solvent, for example, benzene, fluorobenzene; a carbonate-based solvent, for example, dimethylcarbonate (DMC), diethylcarbonate (DEC), methylethylcarbonate (MEC), ethylmethylcarbonate (EMC), ethylene carbonate (EC), propylene carbonate (PC); an alcohol-based solvent, for example, ethylalcohol, isopropyl alcohol; nitriles of R-CN (R is a C2 to C20 straight-chain, branched-chain or cyclic hydrocarbon, and may comprise an exocyclic double bond or ether bond); amides, for example, dimethylformamide; dioxolanes, for example, 1,3-dioxolane; or sulfolanes. Among them, the carbonate-based solvent is desirable, and more preferably, the cyclic carbonate (for example, ethylene carbonate or propylene carbonate) having high ionic conductivity and high dielectric constant which contributes to the improved charge/discharge performance of the battery may be mixed with the linear carbonate-based compound (for example, ethylmethyl carbonate, dimethyl carbonate or diethyl carbonate) of low viscosity. In this case, the cyclic carbonate and the chain carbonate may be mixed at a volume ratio of about 1:1 to about 1:9 to improve the performance of the electrolyte solution.

The lithium salt may include, without limitation, any compound that can provide lithium ions used in the lithium secondary battery. Specifically, the lithium salt may include LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI or LiB(C₂O₄)₂. The concentration of the lithium salt may range from 0.1 to 2.0M. When the concentration of the lithium salt is included in the above-described range, the electrolyte has the optimal conductivity and viscosity, resulting in good performance of the electrolyte and effective movement of lithium ions.

In addition to the above-described constituent substances of the electrolyte, the electrolyte may further comprise, for example, at least one type of additive of a haloalkylene carbonate-based compound such as difluoro ethylene carbonate, pyridine, triethylphosphite, triethanolamine, cyclic ether, ethylene diamine, n-glyme, hexaphosphoric triamide, nitrobenzene derivatives, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in order to improve the life characteristics of the battery, prevent the capacity fading of the battery and improve the discharge capacity of the battery. In this instance, the additive may be included in an amount of 0.1 to 5 weight% based on the total weight of the electrolyte.

The lithium secondary battery according to the present disclosure is useful in the field of mobile devices including mobile phones, laptop computers and digital cameras, and electric vehicles including hybrid electric vehicles (HEVs).

Hereinafter, the embodiment of the present disclosure will be described in sufficiently detail for those having ordinary skill in the technical field pertaining to the present disclosure to easily practice the present disclosure. However, the present disclosure may be embodied in many different forms and is not limited to the disclosed embodiment.

### Example 1:

0.6 weight% of β-chitin (Glycosyn,β-chitin) was dissolved in 1,1,1,3,3,3-hexafluoro-2-propanol (HFIP) to prepare a solution. Additionally, a porous polyethylene separator film (SEMCORP, SV9 fabric) having Gurley time of 65 s/100 cc and thickness of 9 µm was prepared.

The prepared β-chitin solution was fed into an electrospinning nozzle controlled to the temperature of 25°C, and dried by random electrospinning with applied voltage of 1.5 kV between the electrospinning nozzle and the separator film to form a porous coating layer of β-chitin nanofibers on one surface of the porous polyethylene separator film.

Subsequently, the above-described process was repeatedly performed on the other surface of the porous polyethylene separator film having the porous coating layer of β-chitin nanofibers on one surface to form the porous coating layer of β-chitin nanofibers on two surfaces of the porous polyethylene separator film.

The following Table 1 summaries the average diameter of the β-chitin nanofibers of the formed porous coating layer, the loading amount and the thickness of the porous coating layer.

### Example 2:

A separator was prepared by the same method as example 1 except that the concentration of β-chitin was changed to 0.4 weight%.

### Comparative example 1:

Instead of the porous coating layer of β-chitin nanofibers, an inorganic/organic porous coating layer was formed by the following method.

Alumina having the average particle size of (500)nm and a copolymer of vinylidene and hexafluoropropylene were added to acetone at a weight ratio of 81:19 to prepare a slurry in which the copolymer is dissolved and alumina is dispersed, and the solid content is 18 weight%.

The prepared slurry was dip-coated on two surfaces of a porous polyethylene separator film and dried to prepare a separator.

### Comparative example 2:

A separator was prepared by the same method as example 1 except that the β-chitin solution was dip-coated on two surfaces of the porous polyethylene separator film and dried.

### Comparative example 3:

A separator was prepared by the same method as example 1 except that a copolymer of vinylidene and hexafluoropropylene (Solvay, Solef21510, acetone) was used instead of the β-chitin solution.

### Comparative example 4:

A separator was prepared by the same method as example 1 except that α-chitin was dissolved instead of β-chitin.

### <Thermal shrinkage rate measurement>

The separator was placed untouched in an oven staying at each of 130°C and 180°C for 30 minutes, then taken out from the oven, and MD length and TD length before and after putting into the oven were measured to evaluate a thermal shrinkage rate.

### <ER measurement>

Each separator according to example and comparative example was cut and placed in Hoshen 2016 coin cell, and it is a measure of resistance to wetting with an electrolyte solution. The battery resistance was measured by an alternating current method at 25°C with EIS (Electrochemical Impedance Spectroscopy) using 1M LiPF6-ethylene carbonate/ethylmethyl carbonate (a weight ratio 3:7) electrolyte solution.

**[Table 1]**

| | Type of polym er | Coating method | Gurley time (s/100 cc) | Average diame ter of nanofi bers (nm) | Thickness of porous coating layer (on two surfaces) | Loading amount (g/m²) (on two surfaces ) | 130°C thermal shrinka ge rate MD/TD (%) | 180°C thermal shrinka ge rate MD/TD (%) | ER (Ω) |
|---|---|---|---|---|---|---|---|---|---|
| Exam ple 1 | β-chitin | electros pinning | 86 | 700 | 4 | 2.1 | 0/0 | 3/1 | 0.43 |
| Exam ple 2 | β-chitin | electros pinning | 94 | 400 | 4 | 1.7 | 0/0 | 0/1 | 0.51 |
| Comp arativ e exam ple 1 | PVDF -HFP | dip coating | 1021 | - | 4 | 2.7 | 16/12 | 64/54 | 2.1 |
| Comp arativ e exam ple 2 | β-chitin | dip coating | 1369 | - | 4 | 2.8 | 0/0 | 0/0 | 1.76 |
| Comp arativ e exam ple 3 | PVDF -HFP | electros pinning | 103 | 500 | 4 | 2.0 | 32/28 | 78/66 | 0.61 |
| Comp arativ e exam ple 4 | α-chitin | electros pinning | 90 | 550 | 4 | 1.9 | 0/0 | 4/2 | 0.67 |

As can be seen from Table 1, it was confirmed that the separators of examples 1 and 2 had improved heat resistant characteristics of the polyolefin substrate, maintained good permeability and exhibited high resistance characteristics. On the other hand, comparative examples 1 and 2 with the dip coating of the polymer solution or the mixed slurry of polymer and inorganic particles had low permeability.

Additionally, the separator of comparative example 3 having the porous coating layer of nanofibers of the copolymer of vinylidene and hexafluoropropylene instead of β-chitin was not so good at enhancing the heat resistant characteristics of the polyolefin substrate.

On the other hand, in particular, it was confirmed that the separator of comparative example 4 having the porous coating layer formed using α-chitin instead of β-chitin exhibited higher resistance than the resistance of example.

## Claims

1. A method for manufacturing a separator for a lithium secondary battery, comprising:
(S1) electrospinning a solution in which β-chitin is dissolved in a solvent on at least one surface of a porous polyolefin substrate having a plurality of pores; and
(S2) drying a result of the (S1) to form a porous coating layer of β-chitin nanofibers.

2. The method for manufacturing the separator for the lithium secondary battery according to claim 1, wherein a thickness of the porous coating layer is 0.5 to 10 µm based on the thickness on one surface of the porous polyolefin substrate.

3. The method for manufacturing the separator for the lithium secondary battery according to claim 1, wherein a loading amount of the porous coating layer is 1 to 15 g/m² based on the loading amount on one surface of the porous polyolefin substrate.

4. The method for manufacturing the separator for the lithium secondary battery according to claim 1, wherein an average diameter of the β-chitin nanofibers is 200 to 2,000 nm.

5. The method for manufacturing the separator for the lithium secondary battery according to claim 1, wherein the porous polyolefin substrate is made of polyethylene.

6. The method for manufacturing the separator for the lithium secondary battery according to claim 1, wherein the solvent is 1,1 1,3,3,3-hexafluoro-2-propanol (HFIP).

7. A separator for a lithium secondary battery, comprising:
a porous polyolefin substrate having a plurality of pores; and
a porous coating layer of electrospun β-chitin nanofibers on at least one surface of the porous polyolefin substrate.

8. The separator for the lithium secondary battery according to claim 7, wherein a thickness of the porous coating layer is 0.5 to 10 µm based on the thickness on one surface of the porous polyolefin substrate.

9. The separator for the lithium secondary battery according to claim 7, wherein a loading amount of the porous coating layer is 1 to 15 g/m² based on the loading amount on one surface of the porous polyolefin substrate.

10. The separator for the lithium secondary battery according to claim 7, wherein an average diameter of the β-chitin nanofibers is 200 to 2,000 nm.

11. The separator for the lithium secondary battery according to claim 7, wherein the porous polyolefin substrate is made of polyethylene.

12. A lithium secondary battery, comprising:
a positive electrode, a negative electrode and the separator according to any one of claims 7 to 11 interposed between the positive electrode and the negative electrode.
